# EUROPEAN PATENT APPLICATION

(11) **EP 4 650 138 A1**
(43) Date of publication of application: **19.11.2025**
(21) Application number: 24206705.6
(22) Date of filing: 15.10.2024
(51) Int. Cl.: B29C 39/02, B29C 39/12, B29C 51/14, B44C 3/10, B44C 5/04, B44C 1/20, B60R 13/00, B60R 13/10, G09F 7/16, B29C 39/00, B29C 67/24, B29C 69/00, B29K 75/00, B29L 9/00, B29L 31/00, B29C 51/20

(54) **METHOD FOR PRODUCING DECORATIVE ELEMENTS**

(30) Priority: 16.05.2024 IT 202400011062
(71) Applicant: Demak S.r.l., 10156 Torino (IT)
(72) Inventor: GASTALDI, Maurizio, I-10125 TORINO (IT); MENOZZI, Alberto, I-10126 TORINO (IT)
(74) Representative: Aseglio-Gianinet, Romina

(57) **Abstract**

The present invention relates to a method for producing one or more decorative elements, comprising the steps of: thermoforming a multi-layer film (10) comprising a first transparent protective layer (12), a second decorative layer (14) containing at least one pigment, and a third support layer (16) of thermoformable plastic material, so as to form at least one recess (28) in said film (10), characterized in that it thus also forms, in said film (10), at least one perimetral collection channel (40) of the recess (28); pouring into said at least one recess (28) a hardening polymer (30) that adheres to the third layer (16) of the film (10); characterized in that when the hardening polymer (30) is still in a fluid state, applying to the third layer (16) of the film (10) a covering sheet (32), wherein said covering sheet (32) is of the adhesive or double-sided type or a removable semi-rigid protective film; wherein said application step performed by exerting upon the covering sheet (32) pressure that is both perpendicular and tangential to the film (10); wherein if by applying said both perpendicular and tangential pressure to the film (10) at least part of the hardening polymer (30) flows out of at least one recess (28), it is pushed by the aforementioned pressure and flows inside the at least one perimetral collection channel (40); leaving the polymer (30), previously poured and enclosed between the third layer (16) of the film (10) and the covering sheet (32), to harden through a hardening process and cutting the film (10) around the said at least one recess (28), thus obtaining a stratified decorative element comprising a portion of said film (10), a layer of polymer (30) and a portion of the sheet (32).

## Description

### Field of the invention

The present invention relates to the production of decorative elements, in particular bright insignia that are applicable to various articles, such as the bodies of motor vehicles and motorcycles, household appliances, bicycles, boats and the like.

### Prior art

Typical examples of such insignia are the model type identification badges that are applied to the rear of a motor vehicle.

According to one example of the prior art, a bright insignia of this type is produced by a method that involves two distinct steps. In the first step, a core having the desired shape is produced by the injection molding of a plastic material, for example ABS. In the second step, such core is immersed in a chromium plating bath such that it is covered with a glossy covering layer which confers thereto a bright reflective appearance.

However, such prior art has a number of drawbacks. In fact, performing the injection molding and chromium plating stages requires decidedly different kinds of skills, which are rarely possessed by the same company. They are therefore typically performed in different locations with logistical and organizational complications. The chromium plating step also requires the use of chemical products that are dangerous to health, such that the handling requires thereof compliance with onerous safety standards and the disposal thereof in an environmentally compatible manner is in any case difficult. As regards the injection molding step it requires molds that are capable of withstanding the high pressures required by this type of technology. Such molds are therefore very expensive, such that the preparation thereof is economically justified only in the case of mass production.

### Summary of the invention

The object of the present invention is therefore that of overcoming the disadvantages of the prior art mentioned above.

Such object is achieved by a method for producing a decorative element as outlined in the appended claims, wherein the definitions thereof form an integral part of the present description.

### Brief description of the figures

The invention will be better understood from the following detailed description of preferred embodiments thereof, given by way of non-limiting example and with reference to the accompanying figures, in which:
- Figure 1 shows a perspective view of the film (10) of the method according to the present invention;
- Figure 2 shows a perspective view of the film of Figure 1 and a frame (18) of the method according to the present invention;
- Figure 3 shows a perspective view of the film of Figure 1 contained within the frame of Figure 2;
- Figure 4 shows a perspective view of the support frame of Figure 3 surmounted by a lamp (22) of the method according to the present invention;
- Figure 5 shows a perspective view of an exploded view of the step of the method according to the present invention wherein the punch (24) and the die (26) operate upon the frame of Figure 3;
- Figure 6 is a perspective view of the film of Figure 1 whereupon a recess (28) has been created according to the method according to the present invention;
- Figure 7 shows a perspective view of the film (10) of Figure 6 wherein the hardening polymer (30) is poured into the recess (28) according to the method according to the present invention;
- Figure 8 shows a view of the film (10) of Figure 7 wherein the polymer (30) has been poured according to the method according to the present invention and has been lev-eled;
- Figure 9 shows a perspective view of the film (10) of Figure 8 whereupon a covering sheet (32) is applied according to the method according to the present invention;
- Figure 10 shows a perspective view of the film (10) of Figure 9 but in a configuration that is upside down compared to that of Figure 9;
- Figure 11 shows a perspective view of Figure 10 wherein the film (10) is subjected to the action of a cutting device (36) according to the method according to the present invention;
- Figure 12 shows a perspective view of a stratified decorative element, in particular an insignia (38) according to the present invention;
- Figure 13 shows a perspective view of a step of the method according to the present invention, wherein a web exerts, on the covering sheet (32), a pressure that is both perpendicular and tangential to the film (10).

In the accompanying figures, identical or similar elements are denoted by the same reference signs.

### Detailed description of the invention

With reference to the Figures from 1 to 13, a first object of the present invention is shown, namely a method which provides for a series of steps which may be easily performed sequentially in the same plant, without recourse to injection molding and chromium plating techniques. As a result, it is simple to implement, adaptable indifferently to small and large series productions, inexpensive and with almost no environmental impact.

A further object of the present invention is a decorative element that is obtainable as a result of performing the method indicated above.

Such decorative element has the advantageous property of having good flexibility. It may therefore adapt itself to curved surfaces at the moment of the application thereof without having to have already been produced with a corresponding predefined curvature. In contrast decorative elements of the prior art are decidedly rigid and, if they are applied to curved surfaces, they must already have a curved shape with a corresponding profile. Further advantages and features of this invention will become apparent from the following detailed description, given by way of non-limiting example with reference to the accompanying drawings, wherein:

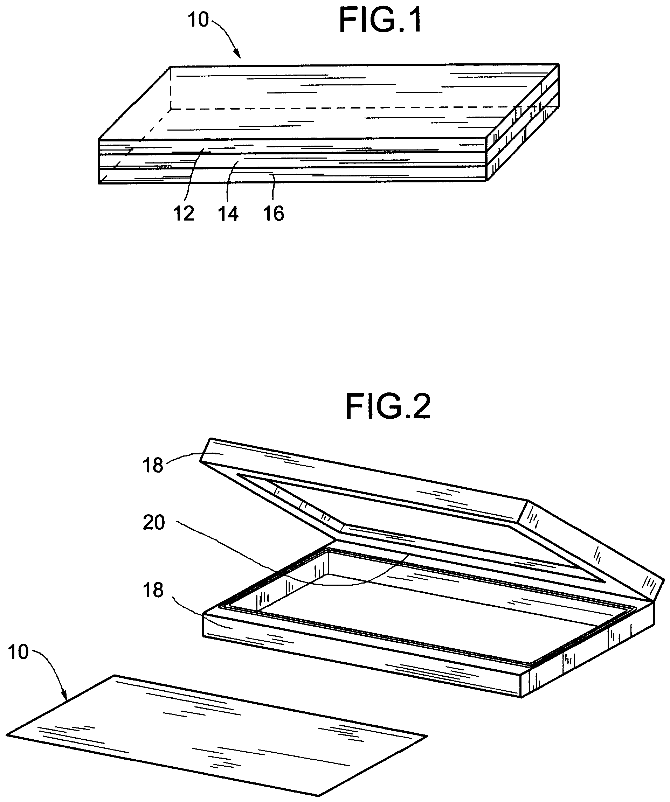

Figures 1 to 13 show in schematic form the steps of a method for producing decorative elements according to the invention.

The method for producing decorative elements, in particular insignia, according to the present invention provides for using as the starting material (Figure 1) a multi-layer film 10 comprising a first transparent protective layer 12, a second decorative layer 14 preferably metallized or containing one or more pigments and a third support layer 16 of a thermoformable plastic material.

The first transparent protective layer 12 may, for example, be made of polyester, polyvinylidene fluoride or poly(met)acrylate. The second layer 14 contains, for example, metallic pigments, whilst the third layer 16 may be made of a material such as ABS or polyurethane or polyethylene terephthalate glycol (PETG) or polymethyl methacrylate (PMMA). The metallic pigments, preferably indium or indium/tin, of the second layer 14 confer a bright reflective or satin appearance to the film 10 or else any known metallized appearance. It is however also possible to use non-metallic pigments that confer a colored appearance or design to the film, for example by reproducing a carbon fiber effect. The overall thickness of the film 10 may typically be of between 200 and 500 µm.

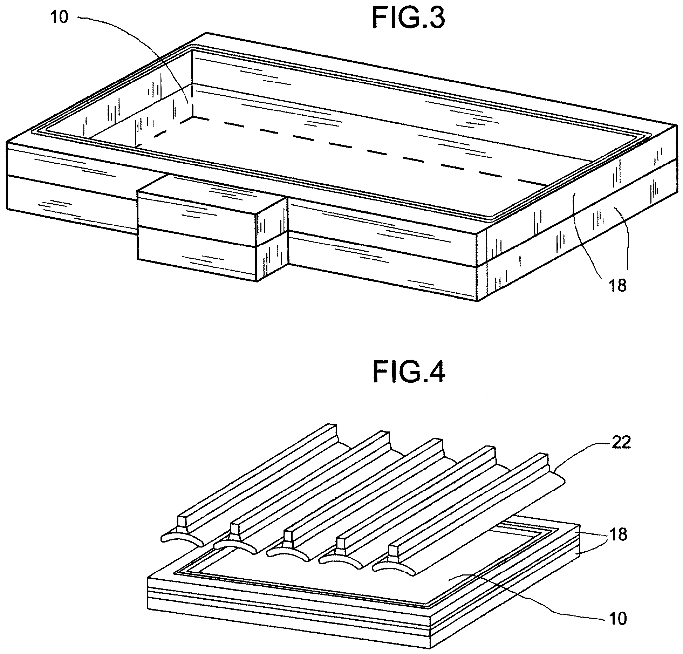

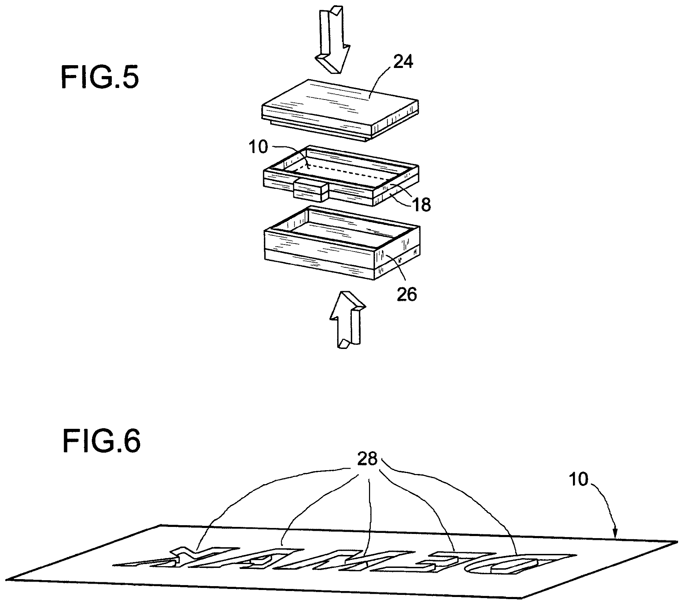

A rectangular segment of the multi-layer film 10 described above is inserted (Figure 2) into a frame formed by two substantially rectangular frames 18 hinged at a long side 20 thereof. The two frames 18 are then closed one on top of the other (Figure 3), thereby blocking the film portion 10 at the perimetral regions. The latter is then heated (Figure 4) to a temperature preferably of between 150 and 200°C by exposure to the irradiation of a lamp 22 and subsequently (Figure 5) clamped between a punch 24 and a die 26 having respectively reliefs and impressions of a desired shape, so as to be thermoformed. The thermoforming produces at least one recess 28 within the segment of film 10 (Figure 6), preferably a plurality of recesses 28, of a shape corresponding to that of the insignia to be obtained. In Figure 6, the recesses 28 are shown as having the shape of the letters constituting the word "DEMAK." It goes without saying that these could all have shapes that are identical therebetween and/or different from those of letters of the alphabet, and be present in substantially any number, possibly even equal to one such that only one large insignia may be obtained.

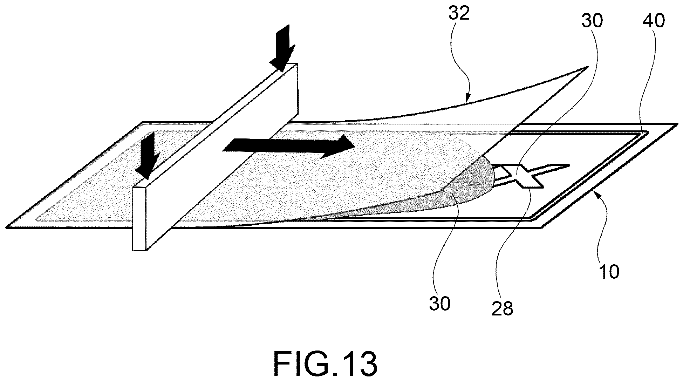

Thermoforming also produces (Figure 13) at least one perimetral collection channel 40 of the recess 28 in the film 10;
The punch 24 is preferably made of a porous material. Even more preferably, it is made of porous aluminum, or porous steel, or porous synthetic resins. Such feature of providing a porous punch provides the advantage of obtaining stratified decorative elements, in particular insignia, having a better aesthetic definition.

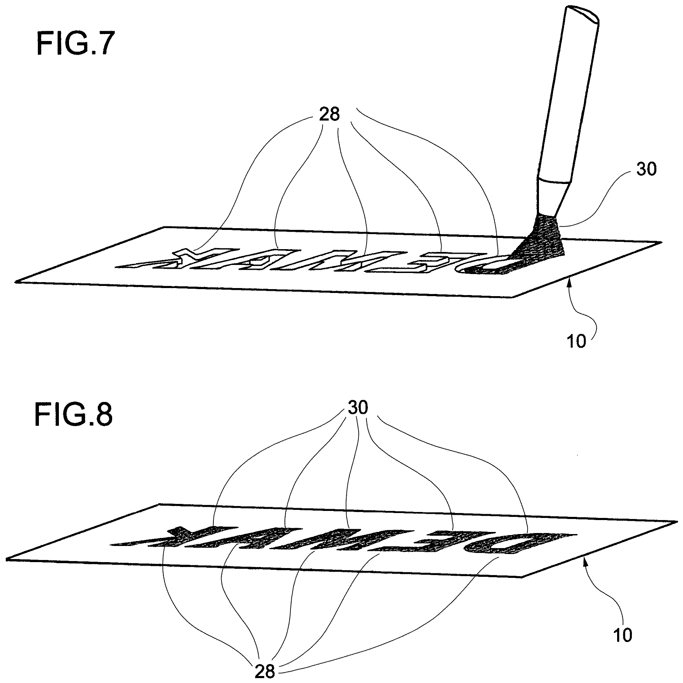

In a subsequent processing step (Figure 7), a hardening polymer 30, preferably having a fluid or liquid state, is poured into the recesses 28 so as to fill them, which polymer adheres to the third layer 16. The hardening polymer 30 is preferably a thermosetting polymer or is a thermoplastic polymer. When the polymer 30 is a thermosetting polymer, it is preferably of the polyurethane type. The thermoformed film 10 (Figure 8) has good consistency and is substantially self-supporting, so that it does not require dedicated support devices during the pouring step wherein it acts as a polymer containment tray.

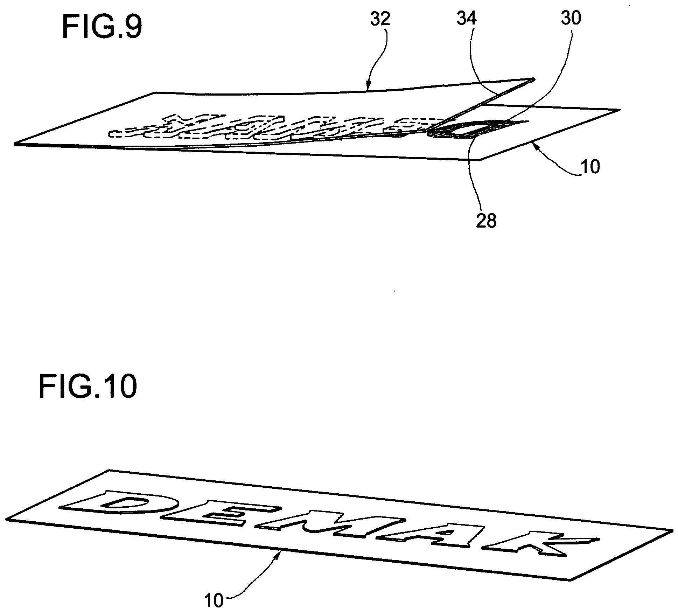

When the hardening polymer 30 is still in a fluid state, a covering sheet 32 is then applied (Figure 9 and Figure 13) to the third layer 16 of the film 10, wherein said covering sheet 32 is of the adhesive or double-sided type or else it is a removable semi-rigid protective film; wherein said application step is conducted by exerting upon the covering sheet 32 pressure that is both perpendicular and tangential to the film 10, wherein if by applying said pressure both perpendicular and tangential to the film 10 at least part of the hardening polymer 30 flows out of at least one recess 28, it is pushed by the aforementioned pressure and flows inside the at least one perimetral collection channel 40. Preferably, when said covering sheet 32 is of the adhesive or double-sided type, it may comprise, upon the face facing the film 10, a protective film that may be removed when the decorative element is to be applied to a surface. On the other hand, when said covering sheet 32 is a semi-rigid protective film, it may preferably be removed once the polymer 30 has hardened.

This feature of providing a collection channel 40 has the advantage of preventing the polymer 30 from escaping beyond the film 10 and thus avoiding contamination of the method equipment that is in contact with the film 10.

The feature of providing, upon the covering sheet 32, pressure that is both perpendicular and tangential to the film 10 has the advantage of leveling the polymer before it hardens, it also allows excess polymer that may have been poured into the recess 28 to be removed, by conveying such excess into the collection channel 40 created during thermoforming, furthermore allowing air bubbles that may have formed between the covering sheet 32 and the polymer 30, still in a fluid or semi-fluid state, to be removed.

The step of applying a covering sheet 32 to the third layer 16 of the film 10 is preferably performed using a doctor blade or roller or other instrument suitable for applying pressure to the covering sheet 32 that is either perpendicular or tangential to the film 10. The doctor blade or roller or other suitable tool preferably slides in pressing against the film 10.

If the polymer 30 is a thermosetting polymer, the hardening process thereof (within the recesses 28) may be accelerated as a result of heating that is performed in having passed through an oven.

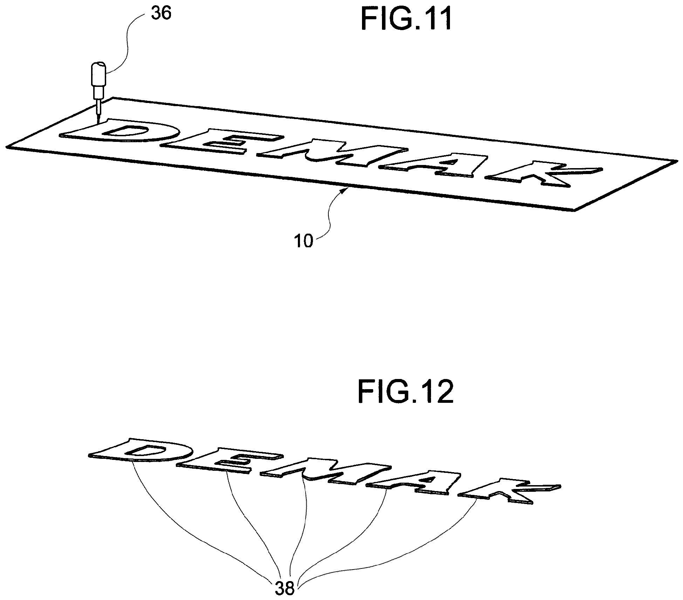

Finally (Figure 11), by means of a cutting device such as a punching or laser beam machine 36, the film 10 is cut around the various grooves 28 filled with polymer 30 and sealed by the sheet 32 thereby obtaining (Figure 12) insignia 38 of the desired shape. The latter have a stratified structure comprising, overlapping therebetween, a layer of film 10, a layer of poured polymer 30 and a layer of covering sheet 32. The film layer 10 in turn comprises a first transparent protective layer 12, a second decorative layer 14 containing at least one pigment and a third support layer 16 of a plastic material whereto the poured polymer 30 adheres.

Naturally, without prejudice to the principle of the invention, the details of construction and the embodiments may vary widely with respect to that which has been described purely by way of example, without thereby departing from the claimed scope. In particular, the method of the invention makes it possible to principally obtain decorative elements in any number and shape.

## Claims

1. Method for producing one or more decorative elements, particularly insignia (38), comprising the steps of:
- thermoforming a multiple-layer film (10) comprising a first transparent protective layer (12), a second decorative layer (14) containing at least one pigment, and a third supporting layer (16) of a thermoformable plastic material, so as to form at least one recess (28) in the said film (10), **characterized in that** it thus also forms, in said film (10), at least one collection channel (40) around the perimeter of the recess (28);
- pouring into the said at least one recess (28) a hardening polymer (30) which adheres to the third layer (16) of the film (10),
- **characterized in that** by applying to the third layer (16) of the film (10), when the hardening polymer (30) is still in a fluid state, a covering sheet (32), wherein said covering sheet (32) is adhesive or double-sided or a removable semi-rigid protective film; wherein said application step is performed by exerting upon the covering sheet (32) pressure that is both perpendicular and tangential to the film (10); wherein if by applying said both perpendicular and tangential pressure to the film (10) at least part of the hardening polymer (30) flows out of at least one recess (28), it is pushed by the aforementioned pressure and flows inside the at least one perimetral collection channel (40);
- leaving the polymer (30), previously poured and enclosed between the third layer (16) of the film (10) and the covering sheet (32), to harden through a hardening process and
- cutting the film (10) around the said at least one recess (28), thus obtaining a stratified decorative element comprising a portion of said film (10), a layer of polymer (30) and a portion of the sheet (32).

2. Method according to claim 1, wherein the step of applying a covering sheet (32) to the third layer (16) of the film (10) is performed by means of the use of a doctor blade or a roller or other suitable tool for applying to the covering sheet (32) pressure that is both perpendicular and tangential to the film (10).

3. Method according to claims 1 or 2, wherein said first transparent protective layer (12) of the multiple-layer film (10) consists of a plastic material selected from the group consisting of polyesters, polyvinylidene fluoride and poly(meth)acrylates.

4. Method according to any one of the preceding claims, wherein the said second layer (14) of the multiple-layer film (10) contains metallic pigments, preferably of indium or indium/tin, conferring a brilliant reflective or satin appearance to the film (10).

5. Method according to any one of the preceding claims, wherein said third layer (16) of the multiple-layer film (10) consists of a material selected from the group consisting of ABS, polyurethane, polyethylene terephthalate glycol (PETG) and polymethyl methacrylate (PMMA).

6. Method according to any one of the preceding claims, wherein the said multiple-layer film (10) has a thickness in the range of between 200 to 500 µm.

7. Method according to any one of the preceding claims, wherein said multiple-layer film (10) is thermoformed at a temperature in the range of between 150°C to 200°C.

8. Method according to any one of the preceding claims, wherein during the thermoforming step a plurality of recesses (28) is formed in said film (10).

9. Method according to any one of the preceding claims from 1 to 7, wherein during the thermoforming step a single recess (28) is formed in the said film (10).

10. Method according to any one of the preceding claims, wherein the thermoformed film acts as a self-supporting vessel whereinto the hardening polymer (30) is subsequently poured.

11. Method according to any one of the preceding claims, wherein said hardening polymer (30) is a thermosetting polymer or is a thermoplastic polymer.

12. Method according to claim 11, wherein said thermosetting polymer (30) is of the polyurethane type and in order to accelerate the hardening thereof it is subjected to a heating step.

13. Method according to any one of the preceding claims, wherein the cutting step is performed by means of a punching machine or a laser beam machine (36).

14. Method according to any of the previous claims, wherein the thermoforming step is performed by using a punch (24) and a die (26), wherein the punch (24) is made of a porous material.

15. Stratified decorative element, particularly insignia (38), which may be produced by the method according to any one of the preceding claims, said decorative element comprising a film layer (10), a layer of poured polymer (30) and a covering sheet layer (32) superimposed on each other, said film layer (10) in turn comprising a first transparent protective layer (12), a second decorative layer (14) containing at least one pigment and a third supporting layer (16) of a plastic material.
